# EUROPÄISCHE PATENTSCHRIFT

(11) **EP 0 910 672 B1**
(45) Veröffentlichungstag und Bekanntmachung des Hinweises auf die Patenterteilung: **13.06.2001**
(21) Anmeldenummer: 97929016.0
(22) Anmeldetag: 09.07.1997
(51) Int. Cl.: C21B 13/14, C21B 13/00

(54) **VERFAHREN ZUM CHARGIEREN VON METALLTRÄGERN IN EINE EINSCHMELZVERGASUNGSZONE**
PROCESS FOR CHARGING OF METAL CARRYING MATERIALS IN A MELT GASIFIER
PROCEDE DE CHARGEMENT DE MATERIAUX METALLIFERES DANS UNE ZONE DE FUSION-GAZEIFICATION

(30) Priorität: 11.07.1996 AT 125296
(43) Veröffentlichungstag der Anmeldung: 28.04.1999
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: GENNARI, Udo, A-4020 Linz (AT); SCHENK, Johannes-Leopold, A-4040 Linz (AT)
(74) Vertreter: Kopecky, Helmut, Dipl.-Ing.
(86) Internationale Anmeldenummer: AT9700154
(87) Internationale Veröffentlichungsnummer: WO9802587

(56) Entgegenhaltungen:
- FR-A- 1 209 963
- GB-A- 1 090 826

## Beschreibung

Die Erfindung betrifft ein Verfahren zum Chargieren von einen Feinanteil enthaltenden und zumindest teilreduzierten Metallträgern, insbesondere Eisenschwamm, in einen Einschmelzvergaser, in dem eine von einem Bett gebildete Einschmelzvergasungszone aufrecht erhalten wird, wobei die Metallträger und Kohlenstoffträger oberhalb der Einschmelzvergasungszone in den Einschmelzvergaser eingebracht werden und zur Einschmelzvergasungszone absinken und diese unter Bildung einer Metallschmelze, insbesondere unter Bildung einer Roheisenschmelze, und unter Erzeugung eines Reduktionsgases durch Kohlevergasung unter Sauerstoffzufuhr im unteren Bereich des Einschmelzvergasers durchwandern sowie eine Anlage zur Durchführung des Verfahrens.

Aus der EP-B - 0 010 627 ist es bekannt, teilchenförmiges eisenhältiges Material, wie vorreduzierten Eisenschwamm, durch eine zentrale Chargieröffnung in der Haube des Einschmelzvergasers von oben zuzuführen, wobei die Teilchen in den Einschmelzvergaser durch Gravitationswirkung hineinfallen und im im Einschmelzvergaser vorhandenen Fließbett abgebremst werden. Stückige Kohle wird durch eine seitlich in der Haube des Einschmelzvergasers bzw. im den Einschmelzvergaser nach oben hin abschließenden Dom angeordnete Chargieröffnung eingebracht, u.zw. ebenfalls unter Gravitationswirkung. Das im Einschmelzvergaser gebildete Reduktionsgas wird durch die zentrale Chargieröffnung für das eisenhaltige Material abgezogen.

Ein Verfahren dieser Art ist für die Verarbeitung von feinteiligen Metallträgern, insbesondere von feinteiligem Eisenschwamm, nicht geeignet, da die feinteiligen Metallträger infolge der starken Gasströmung des in der Einschmelzvergasungszone gebildeten Reduktionsgases, das durch die zentrale Chargieröffnung in der Haube bzw. im Dom des Einschmelzvergasers abgezogen wird, sofort aus dem Einschmelzvergaser ausgetragen werden würden. Ein solches Austragen der feinteiligen Metallträger wird noch durch die Temperatur im oberen Bereich des Einschmelzvergasers, d.h. im Bereich oberhalb der Einschmelzvergasungszone, begünstigt, da diese zu nieder ist, um ein Einschmelzen, d.h. ein Agglomerieren der Feinteilchen am Ort der Einbringung zu größeren Teilchen, die in die Einschmelzvergasungszone trotz des aufwärts strömenden Gases absinken könnten, sicherzustellen.

Aus der EP-A - 0 217 331 ist es bekannt, vorreduziertes Feinerz in einen Einschmelzvergaser zu leiten und mittels eines Plasmabrenners unter Zuführung kohlenstoffhältigen Reduktionsmittels fertigzureduzieren und aufzuschmelzen. Das vorreduzierte Feinerz bzw. das Eisenschwamm-Pulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzenansammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Aus der EP-B - 0 111 176 ist es bekannt, eine Feinkornfraktion von Eisenschwammpartikeln in den Einschmelzvergaser über ein Fallrohr zuzuleiten, das vom Kopf des Einschmelzvergasers bis in die Nähe des Kohlefließbettes ragt. Am Ende des Fallrohres ist eine Prallplatte zur Geschwindigkeitsminimierung der Feinkornfraktion vorgesehen, wodurch die Austrittsgeschwindigkeit der Feinkornfraktion aus dem Fallrohr sehr gering ist. An der Stelle der Einbringung ist die im Einschmelzvergaser herrschende Temperatur sehr niedrig, wodurch es nicht zu einem sofortigen Aufschmelzen der zugeführten Feinkornfraktion kommen kann. Dies und die niedrige Austrittsgeschwindigkeit aus dem Fallrohr bedingt, daß ein beträchtlicher Anteil der zugeführten Feinkornfraktion mit dem im Einschmelzvergaser erzeugten Reduktionsgas aus diesem wieder ausgetragen wird. Das Einbringen einer größeren Menge von einen Feinanteil enthaltenden Eisenschwammpartikeln bzw. ausschließlich einer Feinkomfraktion ist gemäß diesem Verfahren nicht möglich.

Aus der EP-A - 0 594 557 ist es bekannt, eine Feinkornfraktion von Eisenschwamm mittels eines Fördergases direkt in das im Einschmelzvergaser von der Einschmelzvergasungszone gebildete Fließbett einzubringen. Dies ist jedoch nachteilig, da hierdurch die Durchgasung des Fließbettes gestört werden kann, denn es kann zu Verstopfungen des wie ein Filter wirkenden Fließbettes infolge der direkt in das Fließbett eingeblasenen Feinkornfraktion kommen. Als Folge davon kann es zu eruptiven Gasdurchbrüchen, die das verstopfte Fließbett aufbrechen, kommen. Hierdurch wird der Vergasungsprozeß für die Kohlenstoffträger und auch der Einschmelzprozeß für das reduzierte Eisenerz stark gestört.

Aus der EP-A - 0 576 414 ist es bekannt, feinteilige Metallträger in die Einschmelzvergasungszone über Staubbrenner zuzuführen. Hierbei ist nachteilig, daß es in der Einschmelzvergasungszone zu Bereichen mit einem Metallüberschuß und Bereichen mit einem Kohlenstoffüberschuß kommen kann.

Aus der GB-A-1 090 826 ist ein Verfahren bekannt, bei dem Eisenerz in einer von oben auf ein in einer Schmelzkammer befindliches Schmelzbett gerichteten Sauerstoff-Brennstoffflamme aufgeschmolzen wird und die Erzschmelze anschließend in eine Reduktionskammer überführt und dort reduziert wird. Zur Herstellung der Brennstoffflamme kann eine Kohlebrenner verwendet werden, in welchem Fall dann ein zentraler Strom von Metallträgern von einem ersten Mantel aus Staubrolle und einem zweiten Mantel aus Sauerstoff ungeben ist. Bei diesem Verfahren wird im unteren Bereich der Samelzrammer kein Sauerstoff zugeführte.

Die Erfindung bezweckt die Vermeidung der oben angeführten Nachteile und Schwierigkeiten und stellt sich die Aufgabe, ein Verfahren der eingangs beschriebenen Art sowie eine Anlage zur Durchführung des Verfahrens zu schaffen, bei welchen ein Verarbeiten von feinteilchenförmigen Metallträgern, ohne ein Brikettieren zu erfordern, möglich ist und hierbei einerseits ein Austragen der zugeführten Feinteilchen im vorreduzierten oder im fertigreduzierten Zustand durch das im Einschmelzvergaser erzeugte Reduktionsgas zuverlässig vermieden wird und andererseits ein gegebenenfalls erforderliches Fertigreduzieren der Feinteilchen gesichert ist. Die Notwendigkeit der Trennung der Metallträger in eine Grob- und eine Feinkornfraktion soll vermieden werden. Weiters soll erfindungsgemäß eine möglichst gleichmäßige Verteilung der Metallträger und der Kohlenstoffträger im Bett der Einschmelzvergasungszone erreicht werden.

Diese Aufgabe wird erfindungsgemäß dadurch gelöst, daß die Metallträger in das Innere des Einschmelzvergasers im vertikalen Abstand unterhalb eines den Einschmelzvergaser nach oben hin abschließenden Domes gravitierend und unter Bildung einer Strähne eingeleitet werden und daß die Strähne von einem Gasmantel umgeben wird, der die frei fallende Strähne ab ihrem Entstehungsniveau über einen Teilbereich der Fallhöhe begleitend umschließt, und daß die Strähne in diesem Teilbereich vom Gasmantel gegen ein Aufweiten gestützt wird.

Dadurch, daß erfindungsgemäß die Strähne von einem die Strähne stützenden Gasmantel umschlossen wird, kann die Einrichtung, die die Metallträger in das Innere des Einschmelzvergasers einbringt, beispielsweise ein Fallrohr, kurz gehalten werden, sodaß die Metallträger über einen längeren Bereich kompakt gehalten werden. Hierdurch wird der Austrag feiner Teilchen der Metallträger stark reduziert, obwohl das Fallrohr kurz gehalten werden kann. Dies bringt noch den zusätzlichen Vorteil einer geringen mechanischen Belastung des Fallrohres, woraus eine hohe Standfestigkeit desselben resultiert.

Gemäß einer bevorzugten Verfahrensweise wird der Gasmantel von einem Kühlgas gebildet, das ein die Metallträger in das Innere des Einschmelzvergasers leitendes Fallrohr unter Bildung eines Kühlmantels umgibt. Hierdurch wird das den Gasmantel bildende Gas doppelt genutzt, und zwar einerseits als Kühlgas für das Fallrohr und anderseits als Schutzmantel, der eine Verlängerung für das Fallrohr bildet.

Durch die Bildung eines Kühlmantels für das Fallrohr können für das Fallrohr handelsübliche hochwarmfeste Stähle trotz der hohen Temperaturen oberhalb der Einschmelzvergasungszone, d.h. im Bereich des den Einschmelzvergaser nach oben hin abschließenden Domes, verwendet werden. Es ist zwar aus der EP-B - 0 111 176 bekannt, in einem Einschmelzvergaser ein Fallrohr vorzusehen, das von oben in den Einschmelzvergaser bis kurz oberhalb der Obergrenze des im Einschmelzvergaser aus Kohle gebildeten Fließbettes ragt und dieses mit einer Wasserkühlung zu versehen. Eine solche Wasserkühlung stellt jedoch ein hohes Sicherheitsrisiko dar, denn ein Wassereintritt in den Einschmelzvergaser kann zur Bildung von Knallgas und damit zu Explosionen führen.

Vorzugsweise wird das Entstehungsniveau der Strähne in einem Bereich des Einschmelzvergasers festgelegt, in dem die maximale Geschwindigkeit des Reduktionsgases 0,45 bis 0,5 m/s beträgt. Hierdurch kann die Einrichtung zum Einbringen der Metallträger in den Einschmelzvergaser, beispielsweise das Fallrohr, kurz gehalten und der Gasverbrauch für die Bildung des Gasmantels gering gehalten werden.

Bevorzugt stützt der Gasmantel die Strähne über einen Teilbereich der Fallhöhe vor Aufweiten, indem die maximale Geschwindigkeit des Reduktionsgases 0,2 bis 0,3 m/s beträgt, wodurch der Austrag von Feinteilchen der Metallträger minimiert wird.

Zur Erzielung einer guten Stützwirkung des Gasmantels wird der Gasmantel zweckmäßig von einem abwärts und parallel zur Strähne strömenden Gas gebildet, dessen Strömungsgeschwindigkeit mehr als das 10 fache, vorzugsweise mehr als das 50 fache der maximalen Geschwindigkeit des Reduktionsgases im Inneren des Einschmelzvergasers beträgt.

Die Verwendung des prozeßeigenen Gases als Kühlgas und zur Bildung des Gasmantels ist nicht nur ökonomisch, sondern verhindert auch eine den Einschmelzvergasungsprozeß störende Änderung der Gaszusammensetzung im Einschmelzvergaser.

Eine Anlage zur Durchführung des Verfahrens mit einem Einschmelzvergaser, der Zuleitungen für sauerstoffhältige Gase und Kohlenstoffträger und zumindest teilreduzierte Metallträger aufweist und von dem eine Gasableitung für Reduktionsgas vom Bereich eines den Einschmelzvergaser nach oben hin abschließenden Domes ausgeht, und der einen Abstich für eine Metallschmelze, insbesondere für Roheisen und Schlacke, aufweist, wobei die Zuführung für sauerstoffhältige Gase im unteren Bereich des Einschmelzvergasers angeordnet ist, ist dadurch gekennzeichnet, daß in einem den Einschmelzvergaser nach oben hin abschließenden Dom im radialen Abstand mindestens einer Gasableitung für Reduktionsgas mindestens eine Zuleitung mit einer Chargiereinrichtung für zumindest teilreduzierte Metallträger vorgesehen ist, die ein im Abstand unterhalb der den Dom bildenden Wand endendes Fallrohr aufweist, wobei das Fallrohr mit einer Gaszuführeinrichtung für die Bildung eines am unteren Ende des Fallrohres entstehenden Gasmantels versehen ist.

Vorzugsweise weist das Fallrohr unter Ausbildung eines Ringspalthohlraumes einen Doppelmantel auf und mündet die Gaszuführeinrichtung in den Ringspalthohlraum.

Zur Bildung des Gasmantels ist zweckmäßig das untere Ende des Fallrohres mit einer Ringspaltöffnung oder mehreren Öffnungen für den Austritt eines durch den Ringspalthohlraum strömenden Gases versehen.

Zur Erzielung einer möglichst gleichmäßigen Verteilung der Metallträger im Fließbett ist es von Vorteil, wenn eine Mehrzahl von Fallrohren am Dom des Einschmelzvergasers angeordnet ist, vorzugsweise in radialsymmetrischer Anordnung.

Die Erfindung ist insbesondere für eine Anlage zum Herstellen von Metallschmelzen, insbesondere Roheisen, aus von Erz, insbesondere Eisenerz, und Zuschlägen gebildeten zumindest teilweise einen Feinanteil aufweisenden Einsatzstoffen geeignet, die gekennzeichnet ist
- durch mindestens zwei hintereinander in Serie geschaltete Wirbelschichtreaktoren, wobei das Erz von Wirbelschichtreaktor zu Wirbelschichtreaktor über Förderleitungen in einer Richtung und Reduktionsgas von Wirbelschichtreaktor zu Wirbelschichtreaktor über Reduktionsgas-Verbindungsleitungen in die entgegengesetzte Richtung geführt ist, und
- durch einen Einschmelzvergaser, in den eine das Reduktionsprodukt aus dem in Fließrichtung des Erzes letztangeordneten Wirbelschichtreaktor führende Zuleitung mündet und dessen Gasableitung in den in Fließrichtung des Erzes letztangeordneten Wirbelschichtreaktor mündet.

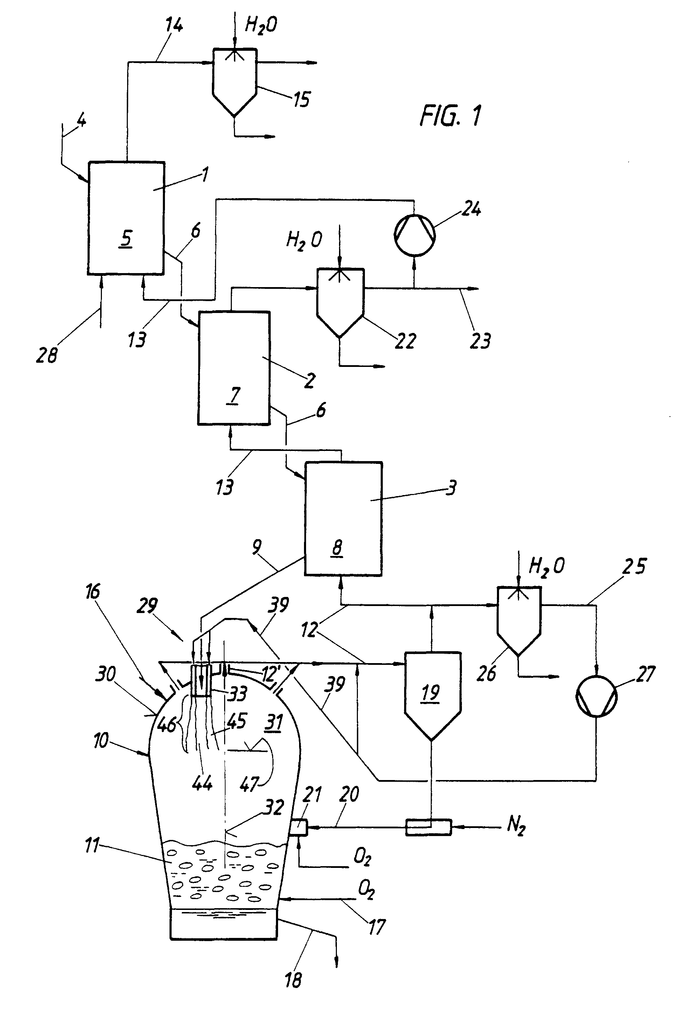

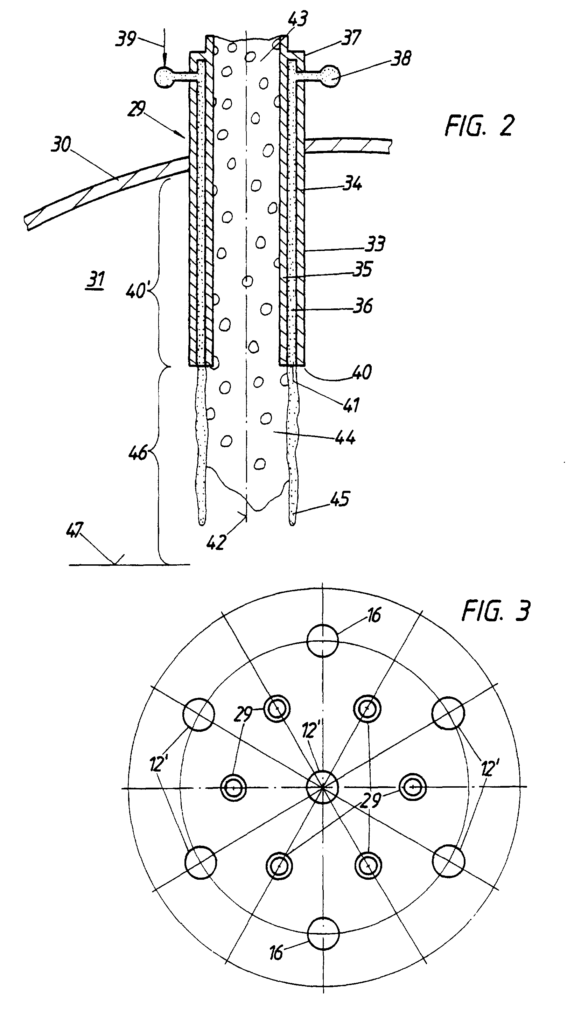

Die Erfindung ist nachfolgend anhand eines in der Zeichnung dargestellten Ausführungsbeispiels näher erläutert, wobei Fig. 1 beispielhaft eine Gesamtanlage zum Herstellen von Metallschmelzen, insbesondere Roheisen oder flüssigen Stahlvorprodukten, in schematischer Darstellung zeigt. Fig. 2 veranschaulicht ein Detail der Fig. 1 in vergrößertem Maßstab. Fig. 3 gibt eine schematisch dargestellte Draufsicht auf den Einschmelzvergaser wieder.

Die Anlage nach Fig. 1 weist drei in Serie hintereinander geschaltete Wirbelschichtreaktoren 1 bis 3 auf, wobei ein zumindest einen Feinkomanteil aufweisendes eisenoxidhältiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End- bzw. Fertig-Reduktion des Feinerzes zu Eisenschwamm.

Das fertigreduzierte Material, also der Eisenschwamm, wird über eine Förderleitung 9 in einen Einschmelzvergaser 10 geleitet, u.zw. in einer bestimmten Art und Weise, wie sie später noch beschrieben wird. Im Einschmelzvergaser 10 wird in einer von einem Fließbett gebildeten Einschmelzvergasungszone 11 aus Kohlenstoffträgern, wie Kohle, und sauerstoffhältigem Gas ein CO- und H₂-hältiges Reduktionsgas erzeugt, das über eine Gasableitung 12, die als Reduktionsgas-Zuleitung 12 für den in Fließrichtung des Feinerzes letztangeordneten Wirbelschichtreaktor 3 dient, in diesen Wirbelschichtreaktor 3 eingeleitet wird. Das Reduktionsgas wird über mehrere - vom Grundriß her gesehen (vgl. Fig. 3) - radialsymmetrisch angeordnete Gasaustrittsstutzen 12' aus dem Einschmelzvergaser 10 abgeleitet.

Das Reduktionsgas wird im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine Topgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20 mit Stickstoff als Fördermittel und über einen Brenner 21 unter Einblasen von Sauerstoff zugeführt werden.

Eine Möglichkeit zur Einstellung der Reduktionsgastemperatur ergibt sich durch die vorzugsweise vorgesehene Gasrückführleitung 25, die von der Reduktionsgas-Zuleitung 12 ausgeht und einen Teil des Reduktionsgases über einen Wäscher 26 und einen Verdichter 27 in diese Reduktionsgas-Zuleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 28 zugeführt werden, wodurch eine Teilverbrennung des der Vorerwärmungsstufe 5 zugeführten umgesetzten Reduktionsgases stattfindet.

Erfindungsgemäß erfolgt die Chargierung des Eisenschwammes über mindestens eine eigene Chargiereinrichtung 29, die am den Einschmelzvergaser 10 nach oben hin abschließenden Dom 30 angeordnet ist und in Fig. 2 vergrößert dargestellt ist. Vorzugsweise sind mehrere Chargiereinrichtungen 29 in um die Längsmittelachse 32 des Einschmelzvergasers 10 radialsymmetrischer Anordnung vorgesehen (Fig. 3).

Jede Chargiereinrichtung 29 weist ein ins Innere 31 des Einschmelzvergasers 10 ragendes Doppelmantelrohr 33 auf. Zwischen dem Außenmantel 34 und dem Innenmantel 35 des Doppelmantelrohrs 33 ist ein ringspaltförmiger Hohlraum 36 gebildet, der mit seinem außerhalb des Einschmelzvergasers 10 liegenden Ende 37 an eine Ringeinspeisleitung 38 für ein Kühlgas angeschlossen ist. Als Kühlgas wird ein von der Gasrückführleitung 25 über eine Zweigleitung 39 mit vorzugsweise einem weiteren nicht näher dargestellten Verdichter abgezweigtes gekühltes Reduktionsgas verwendet. Am ins Innere 31 des Einschmelzvergasers 10 ragenden Ende 40 des Doppelmantelrohrs 33 ist entweder eine Ringspaltöffnung 41 vorgesehen oder es sind mehrere benachbarte Bohrungen mit etwa parallel zur Längsmittelachse 42 des Doppelmantelrohrs 33 vorgesehenen Mittelachsen angeordnet, durch die das Kühlgas in das Innere 31 des Einschmelzvergasers 10 strömt.

Der zentrale Innenraum 43 des Doppelmantelrohrs 33 ist an die Förderleitung 9 zur Einbringung des Eisenschwamms angeschlossen. Der Eisenschwamm fällt durch das ein Fallrohr bildende Doppelmantelrohr 33 in das Innere 31 des Einschmelzvergasers 10 und bildet am unteren Ende 40 des Fallrohres 33 eine frei weiterfallende Strähne 44. Das untere Ende 40 des Fallrohres 33 befindet sich im vertikalen Abstand 40' vom Dom 30 an einer Stelle, an der das Reduktionsgas noch nicht seine maximale Strömungsgeschwindigkeit aufweist. Diese Strähne 44 wird durch das ebenfalls am unteren Ende 40 des Fallrohres 33 ausströmende Kühlgas, das hier einen Gasmantel 45 bildet, umschlossen und am Aufweiten gehindert. Dieser Gasmantel 45 bildet somit über zumindest einen Teil 46 der freien Fallhöhe des Eisenschwamms - so wie das Fallrohr 33 - einen Schutzmantel, sodaß die Feinteilchen des Eisenschwamms durch das mit relativ hoher Geschwindigkeit nach oben strömende Reduktionsgas - dessen Strömungsgeschwindigkeit am größten bei den Austrittsstutzen 12' ist - nicht mitgerissen werden. In dem Höhenniveau 47, in dem die Strähne 44 sich infolge des Nachlassens der Stützwirkung des Gasmantels aufweitet, ist die Geschwindigkeit des Reduktionsgases wesentlich geringer, sodaß die Feinteilchen am Fallen bzw. Absinken in das Fließbett der Einschmelzvergasungszone 11 nicht gehindert werden.

Erfindungsgemäß können somit Grob- und Feinteilchen gemeinsam in den Einschmelzvergaser eingebracht werden; eine Trennung in eine Grob- und eine Feinkornfraktion ist nicht erforderlich.

Die Geschwindigkeit des Kühlgases ist an der Austrittsstelle aus dem Fallrohr, d.h. dem unteren Ende 40 des Fallrohres 33, mindestens 10 mal, vorzugsweise 50 bis 100 mal höher als die maximale Geschwindigkeit des Reduktionsgases. Hierdurch kann der Gasmantel relativ dünnwandig gehalten werden, sodaß die Menge des in den Einschmelzvergaser 10 rückgeführten Reduktionsgases relativ gering ist.

Die Durchströmung des Hohlraumes 36 des Doppelmantelrohrs 33 mit Kühlgas mit anschließendem Austritt des Kühlgases an der unteren Öffnung 41 des Doppelmantelrohrs 33 bringt eine der mechanischen Belastung des Doppelmantelrohrs 33 angepaßte Kühlwirkung mit sich.

Die Kühlwirkung des Kühlgases ist dort am größten, wo die mechanische Belastung des Doppelmantelrohrs 33 durch sein Eigengewicht am größten ist, nämlich im Bereich des Durchtritts des Doppelmantelrohrs 33 durch den Dom 30 des Einschmelzvergasers 10. Es kommt dann während des Weiterströmens des Kühlgases durch den Hohlraum 36 des Doppelmantelrohrs 33 zu einer Erwärmung des Kühlgases, was zur Folge hat, daß sich die Geschwindigkeit des Kühlgases erhöht. Hierdurch kommt man mit relativ kurzen Doppelmantelrohren 33 aus, deren mechanische und thermische Belastung dementsprechend geringer ist als bei sehr langen, bis knapp oberhalb des Fließbettes ragenden Fallrohren. Die Standfestigkeit der erfindungsgemäßen Konstruktion ist hierdurch sehr hoch.

Durch die Kühlwirkung erübrigt sich der Einsatz sehr teurer Sonderwerkstoffe auf der Basis von Spezialkeramik oder Superlegierungen auf Fe-Basis. Es genügt vielmehr, das Doppelmantelrohr 33 aus hochwarmfestem Stahl zu fertigen.

## Patentansprüche

1. Verfahren zum Chargieren von einen Feinanteil enthaltenden und zumindest teilreduzierten Metallträgern, insbesondere Eisenschwamm, in einen Einschmelzvergaser (10), in dem eine von einem Bett gebildete Einschmelzvergasungszone (11) aufrecht erhalten wird, wobei die Metallträger und Kohlenstoffträger oberhalb der Einschmelzvergasungszone (11) in den Einschmelzvergaser (10) eingebracht werden und zur Einschmelzvergasungszone (11) absinken und diese unter Bildung einer Metallschmelze, insbesondere unter Bildung einer Roheisenschmelze, und unter Erzeugung eines Reduktionsgases durch Kohlevergasung unter Sauerstoffzufuhr im unteren Bereich des Einschmelzvergasers (10) durchwandern, dadurch gekennzeichnet, daß die Metallträger in das Innere des Einschmelzvergasers (10) im vertikalen Abstand unterhalb eines den Einschmelzvergaser (10) nach oben hin abschließenden Domes (30) gravitierend und unter Bildung einer Strähne (44) eingeleitet werden und daß die Strähne (44) von einem Gasmantel (45) umgeben wird, der die frei fallende Strähne (44) ab ihrem Entstehungsniveau (bei 40) über einen Teilbereich (46) der Fallhöhe begleitend umschließt, und daß die Strähne (44) in diesem Teilbereich (46) vom Gasmantel (45) gegen ein Aufweiten gestützt wird.

2. Verfahren nach Anspruch 1, dadurch gekennzeichnet, daß der Gasmantel (45) von einem Kühlgas gebildet wird, das ein die Metallträger in das Innere des Einschmelzvergasers (10) leitendes Fallrohr (33) unter Bildung eines Kühlmantels umgibt.

3. Verfahren nach Anspruch 1 oder 2, dadurch gekennzeichnet, daß das Entstehungsniveau (bei 40) der Strähne (44) in einem Bereich des Einschmelzvergasers (10) festgelegt wird, in dem die maximale Geschwindigkeit des Reduktionsgases 0,45 bis 0,5 m/s beträgt.

4. Verfahren nach einem oder mehreren der Ansprüche 1 bis 3, dadurch gekennzeichnet, daß der Gasmantel (45) die Strähne (44) über einen Teilbereich (46) der Fallhöhe vor Aufweiten stützt, indem die maximale Geschwindigkeit des Reduktionsgases 0,2 bis 0,3 m/s beträgt.

5. Verfahren nach einem oder mehreren der Ansprüche 1 bis 4, dadurch gekennzeichnet, daß der Gasmantel (45) von einem abwärts und parallel zur Strähne strömenden Gas gebildet wird, dessen Strömungsgeschwindigkeit mehr als das 10 fache, vorzugsweise mehr als das 50 fache der maximalen Geschwindigkeit des Reduktionsgases im Inneren (31) des Einschmelzvergasers (10) beträgt.

6. Verfahren nach einem oder mehreren der Ansprüche 1 bis 5, dadurch gekennzeichnet, daß als Gas für den Gasmantel (45) aus dem Einschmelzvergaser (10) abgezogenes gekühltes Reduktionsgas eingesetzt wird.

7. Anlage zur Durchführung des Verfahrens nach einem oder mehreren der Ansprüche 1 bis 6, mit einem Einschmelzvergaser (10), der Zuleitungen (17, 16, 9) für sauerstoffhältige Gase und Kohlenstoffträger und zumindest teilreduzierte Metallträger aufweist und von dem eine Gasableitung (12) für Reduktionsgas vom Bereich eines den Einschmelzvergaser (10) nach oben hin abschließenden Domes (30) ausgeht, und der einen Abstich (18) für eine Metallschmelze, insbesondere für Roheisen und Schlacke, aufweist, wobei die Zuführung (17) für sauerstoffhältige Gase im unteren Bereich des Einschmelzvergasers (10) angeordnet ist, dadurch gekennzeichnet, daß in einem den Einschmelzvergaser (10) nach oben hin abschließenden Dom (30) im radialen Abstand mindestens einer Gasableitung (12) für Reduktionsgas mindestens eine Zuleitung (9) mit einer Chargiereinrichtung (29) für zumindest teilreduzierte Metallträger vorgesehen ist, die ein im Abstand unterhalb der den Dom (30) bildenden Wand endendes Fallrohr (33) aufweist, wobei das Fallrohr (33) mit einer Gaszuführeinrichtung (38) für die Bildung eines am unteren Ende (40) des Fallrohres (33) entstehenden Gasmantels (45) versehen ist.

8. Anlage nach Anspruch 7, dadurch gekennzeichnet, daß das Fallrohr (33) unter Ausbildung eines Ringspalthohlraumes (36) einen Doppelmantel (34, 35) aufweist und die Gaszuführeinrichtung (38) in den Ringspalthohlraum (36) mündet.

9. Anlage nach Anspruch 8, dadurch gekennzeichnet, daß das untere Ende (40) des Fallrohres (33) mit einer Ringspaltöffnung (41) oder mehreren Öffnungen für den Austritt eines durch den Ringspalthohlraum (36) strömenden Gases versehen ist.

10. Anlage nach Anspruch 7 oder 8, dadurch gekennzeichnet, daß die Gasableitung (12) für Reduktionsgas über eine Kühleinrichtung (26), insbesondere einen Gaswäscher, geführt ist, und daß nach der Kühleinrichtung (26) eine Zweigleitung (39) abzweigt, die vorzugsweise über einen Verdichter zur Gaszuführeinrichtung (38) des Fallrohres (33) geführt ist.

11. Anlage nach einem oder mehreren der Ansprüche 7 bis 10, dadurch gekennzeichnet, daß eine Mehrzahl von Fallrohren (33) am Dom (30) des Einschmelzvergasers (10) angeordnet ist, vorzugsweise in radialsymmetrischer Anordnung.

12. Anlage zum Herstellen von Metallschmelzen, insbesondere Roheisen, aus von Erz, insbesondere Eisenerz, und Zuschlägen gebildeten, zumindest teilweise einen Feinanteil aufweisenden Einsatzstoffen, gekennzeichnet
• durch mindestens zwei hintereinander in Serie geschaltete Wirbelschichtreaktoren (1 bis 3), wobei das Erz von Wirbelschichtreaktor (1) zu Wirbelschichtreaktor (2, 3) über Förderleitungen (6) in einer Richtung und Reduktionsgas von Wirbelschichtreaktor (3) zu Wirbelschichtreaktor (2, 1) über Reduktionsgas-Verbindungsleitungen (13) in die entgegengesetzte Richtung geführt ist, und
• durch einen Einschmelzvergaser (10) nach Anspruch 7, in den eine das Reduktionsprodukt aus dem in Fließrichtung des Erzes letztangeordneten Wirbelschichtreaktor (3) führende Zuleitung (9) mündet und dessen Gasableitung (12) in den in Fließrichtung des Erzes letztangeordneten Wirbelschichtreaktor (3) mündet (Fig. 1).

## Claims

1. A method of charging metal carriers, in particular sponge iron, which contain a portion of fines and are at least partially reduced into a melter gasifier (10) in which a melt-down gasifying zone (11) formed by a bed is maintained, wherein the metal carriers and carbon carriers are fed into the melter gasifier (10) above the level of the melt-down gasifying zone (11) and descend to the melt-down gasifying zone (11) and travel through the same forming a metal melt, in particular forming a pig iron melt, and producing a reducing gas by coal gasification under oxygen supply in the lower region of the melter gasifier (10), characterized in that at a vertical distance below a dome (30) terminating the melter gasifier (10) toward the top the metal carriers are fed into the interior of the melter gasifier (10) gravitationally and under formation of a strand (44) and that the strand (44) is surrounded by a gas jacket (45) enclosing and accompanying the freely falling strand (44) from its level of origin (at 40) onwards over a section (46) of the height of fall, and that in this section (46) the strand (44) is supported against expansion by the gas jacket (45).

2. A method according to claim 1, characterized in that the gas jacket (45) is formed by a cooling gas which under formation of a cooling jacket surrounds a downpipe (33) conducting the metal carriers into the interior of the melter gasifier (10).

3. A method according to claim 1 or 2, characterized in that the level of origin (at 40) of the strand (44) is fixed in a region of the melter gasifier (10) where the maximum velocity of the reducing gas is 0.45 to 0.5 m/s.

4. A method according to one or several of claims 1 to 3, characterized in that the gas jacket (45) supports the strand (44) against expansion over a section (46) of the height of fall in that the maximum velocity of the reducing gas is 0.2 to 0.3 m/s.

5. A method according to one or several of claims 1 to 4, characterized in that the gas jacket (45) is formed by a gas which flows downwards and parallel to the strand and which has a velocity of flow more than ten times, preferably more than fifty times the maximum velocity of the reducing gas in the interior (31) of the melter gasifier (10).

6. A method according to one or several of claims 1 to 5, characterized in that cooled reducing gas withdrawn from the melter gasifier (10) is utilized as gas for the gas jacket (45).

7. A plant for carrying out the method according to one or several of claims 1 to 6, comprising a melter gasifier (10) which has feed ducts (17, 16, 9) for oxygen-containing gases and carbon carriers and at least partially reduced metal carriers and from which a gas discharge duct (12) for reducing gas departs in the region of a dome (30) terminating the melter gasifier (10) toward the top, and which is provided with a tap (18) for a metal melt, in particular for pig iron and slag, wherein the feed duct (17) for oxygen-containing gases is arranged in the lower region of the melter gasifier (10), characterized in that in a dome (30) terminating the melter gasifier (10) toward the top, at a radial distance of at least one gas discharge duct (12) for reducing gas, at least one feed duct (9) with a charging unit (29) for at least partially reduced metal carriers is provided, which is equipped with a downpipe (33) ending at a distance below the wall that forms the dome (30), wherein said downpipe (33) is provided with a gas supply means (38) for the generation of a gas jacket (45) forming at the lower end (40) of the downpipe (33).

8. A plant according to claim 7, characterized in that the downpipe (33) comprises a double jacket (34, 35) under formation of an annular gap cavity (36) and the gas supply means (38) opens into said annular gap cavity (36).

9. A plant according to claim 8, characterized in that the lower end (40) of the downpipe (33) is provided with an annular gap opening (41) or several openings for the exit of a gas flowing through the annular gap cavity (36).

10. A plant according to claim 7 or 8, characterized in that the gas discharge duct (12) for reducing gas is conducted via a cooling means (26), in particular a gas scrubber, and that after the cooling means (26) a branch duct (39) departs, which preferably is conducted to the gas supply means (38) of the downpipe (33) via a compressor.

11. A plant according to one or several of claims 7 to 10, characterized in that a plurality of downpipes (33) is arranged on the dome (30) of the melter gasifier (10), preferably in a radially symmetrical arrangement.

12. A plant for the production of metal melts, in particular pig iron, from charging substances formed of ore, in particular iron ore, and of fluxes and at least partially containing a portion of fines, characterized
• by at least two fluidized bed reactors (1 to 3) subsequently connected in series, wherein the ore is conducted from fluidized bed reactor (1) to fluidized bed reactor (2, 3) via conveying ducts (6) in one direction and reducing gas is conducted from fluidized bed reactor (3) to fluidized bed reactor (2, 1) via reducing-gas connecting ducts (13) in the opposite direction, and
• by a melter gasifier (10) according to claim 7, into which there runs a feed duct (9) conducting the reduction product from the fluidized bed reactor (3) arranged last in the direction of the ore flow and whose gas discharge duct (12) runs into the fluidized bed reactor (3) arranged last in the direction of the ore flow (Fig. 1).

## Revendications

1. Procédé pour le chargement de produits d'apport de métal qui contiennent des fines et du moins partiellement réduits, en particulier de la mousse de fer, dans un gazéificateur de fusion (10), dans lequel on maintient une zone de gazéification de fusion (11) formée par un lit, les produits d'apport de métal et les produits d'apport de carbone sont amenés dans le gazéificateur de fusion (10) au-dessus de la zone de gazéification de fusion (11) et descendent en direction de cette zone de gazéification de fusion (11) puis traversent celle-ci en formant un métal en fusion, en particulier en formant une fonte de fer brut, et en produisant un gaz de réduction par gazéification du charbon avec admission d'oxygène dans la région inférieure du gazéificateur de fusion (10), caractérisé en ce que les produits d'apport de métal sont amenés sous l'effet de la gravité dans l'intérieur du gazéificateur de fusion (10) à distance verticale au-dessous d'une coupole (30) refermant le gazéificateur de fusion (10) vers le haut, de sorte qu'il se forme une mèche (44), et en ce que la mèche (44) est entourée par une enveloppe de gaz (45) qui enferme la mèche (44) en chute libre à partir du niveau de sa formation (vers 40) en l'accompagnant sur une région partielle (46) de la hauteur de chute, et en ce que la mèche (44) est soutenue dans cette région partielle (46) par l'enveloppe de gaz (45) à l'encontre d'un évasement.

2. Procédé selon la revendication 1, caractérisé en ce que l'enveloppe de gaz (45) est formée par un gaz réfrigérant qui entoure le tube de chute (33) qui mène les produits d'apport de métal dans l'intérieur du gazéificateur de fusion (10), en formant une enveloppe de refroidissement.

3. Procédé selon l'une ou l'autre des revendications 1 et 2, caractérisé en ce que le niveau de formation (vers 40) de la mèche (44) est fixé dans une région du gazéificateur de fusion (10), dans laquelle la vitesse maximale du gaz de réduction est de 0,45 à 0,5 m/s.

4. Procédé selon l'une ou plusieurs des revendications 1 à 3, caractérisé en ce que l'enveloppe de gaz (45) soutient la mèche (44) sur une région partielle (46) de la hauteur de chute à l'encontre d'un évasement, la vitesse maximale du gaz de réduction étant de 0,2 à 0,3 m/s.

5. Procédé selon l'une ou plusieurs des revendications 1 à 4, caractérisé en ce que l'enveloppe de gaz (45) est formée par un gaz qui s'écoule vers le bas et parallèlement à la mèche et dont la vitesse d'écoulement est plus de 10 fois, de préférence plus de 50 fois la vitesse maximale du gaz de réduction dans l'intérieur (31) du gazéificateur de fusion (10).

6. Procédé selon l'une ou plusieurs des revendications 1 à 5, caractérisé en ce que l'on utilise, en tant que gaz pour l'enveloppe de gaz (45), le gaz de réduction refroidi prélevé hors du gazéificateur de fusion (10).

7. Installation pour mettre en oeuvre le procédé selon l'une ou plusieurs des revendications 1 à 6, comportant un gazéificateur de fusion (10) qui comprend des conduites d'amenée (17, 16, 9) pour des gaz contenant de l'oxygène et pour des produits d'apport de carbone et des produits d'apport de métal du moins partiellement réduits, et depuis lequel part une conduite d'évacuation de gaz (12) pour le gaz de réduction de la zone d'une coupole (30) refermant le gazéificateur de fusion (10) vers le haut, et qui comprend une prise de coulée (18) pour une fonte de métal, en particulier pour le fer brut et le laitier, dans laquelle l'admission (17) pour des gaz contenant de l'oxygène est agencée dans la région inférieure du gazéificateur de fusion (10), caractérisée en ce qu'il est prévu, dans une coupole (30) refermant le gazéificateur de fusion (10) vers le haut, à distance radiale d'au moins une conduite d'évacuation de gaz (12) pour le gaz de réduction, au moins une conduite d'amenée (9) comportant un dispositif de chargement (29) pour des produits d'apport de métal du moins partiellement réduits, lequel comprend un tube de chute (33) qui se termine à distance au-dessous de la paroi formant la coupole (30), le tube de chute (33) étant pourvu d'un dispositif d'amenée de gaz (38) pour la formation d'une enveloppe de gaz (45) qui se produit à l'extrémité inférieure (40) du tube de chute (33).

8. Installation selon la revendication 7, caractérisée en ce que le tube de chute (33) comprend une enveloppe double (34, 35) en formant un creux définissant une fente annulaire (36), et en ce que le dispositif d'amenée de gaz (38) débouche dans la fente annulaire (36).

9. Installation selon la revendication 8, caractérisée en ce que l'extrémité inférieure (40) du tube de chute (33) est pourvue d'une ouverture de fente annulaire (41) ou de plusieurs ouvertures pour la sortie d'un gaz qui s'écoule à travers la fente annulaire (36).

10. Installation selon l'une ou l'autre des revendications 7 et 8, caractérisée en ce que la conduite d'évacuation de gaz (12) pour le gaz de réduction est menée via un dispositif de refroidissement (26), en particulier via un épurateur de gaz, et en ce qu'une conduite de bifurcation (39) dérive après le dispositif de refroidissement (26), qui est menée de préférence via un compresseur vers le dispositif d'amenée de gaz (38) du tube de chute (33).

11. Installation selon l'une ou plusieurs des revendications 7 à 10, caractérisée en ce qu'une pluralité de tubes de chute (33) sont agencés sur la coupole (30) du gazéificateur de fusion (10), de préférence en symétrie radiale.

12. Installation pour produire des fontes de métal, en particulier du fer brut à partir de substances formées par du minerai, en particulier du minerai de fer et des additifs et contenant au moins en partie des fines, caractérisée par :
- au moins deux réacteurs à lit fluidisé (1 à 3) branchés en série l'un derrière l'autre, le minerai étant guidé d'un réacteur à lit fluidisé (1) à l'autre (2, 3) via des conduites de convoyage (6) dans une direction et le gaz de réduction étant guidé d'un réacteur à lit fluidisé (3) à l'autre (2, 1) via des conduites de liaison à gaz de réduction (13) dans la direction opposée, et par
- un gazéificateur de fusion (10) selon la revendication 7, dans lequel débouche une conduite d'amenée (9) qui mène le produit de réduction depuis le dernier réacteur à lit fluidisé (3), vu en direction d'écoulement du minerai, et dont la conduite d'évacuation de gaz (12) débouche dans le dernier réacteur à lit fluidisé (3), vu en direction d'écoulement du minerai (figure 1).
